# EUROPÄISCHE PATENTANMELDUNG

(11) **EP 1 191 670 A2**
(43) Veröffentlichungstag der Anmeldung: **27.03.2002**
(21) Anmeldenummer: 01122750.1
(22) Anmeldetag: 21.09.2001
(51) Int. Cl.: H02K 9/04

(54) **Elektrische Maschine mit einem Gehäuse und zumindest einem Lüfter**

(30) Priorität: 26.09.2000 DE 10048013
(71) Anmelder: SIEMENS AKTIENGESELLSCHAFT, 80333 München (DE)
(72) Erfinder: Weichselbaum, Andreas, 91207 Lauf (DE); Werner, Ulrich, 91088 Bubenreuth (DE)

(57) **Zusammenfassung**

Bei einer elektrische Maschine (1) mit einem Gehäuse und zumindest einem Lüfter, sind Mittel vorhanden, die den durch den Lüfter (3) erzeugten Luftstrom entlang der Oberfläche des Gehäuses der elektrischen Maschine führen.

## Beschreibung

Bei oberflächengekühlten elektrischen Maschinen ist insbesondere an den vom Lüfter entfernten Gehäuseteilen des zu kühlenden Gehäuses eine reduzierte Kühlwirkung festzustellen. Dies liegt zum einen daran, daß der Kühlluftstrom bereits aufgeheizt ist, als auch an einer Strömungsablösung des Kühlluftstroms am Gehäuse dieser elektrischen Maschine. Dadurch reduziert sich die Kühlwirkung vor allem an diesen Gehäuseteilen. Die reduzierte Kühlwirkung führt, um die gleichen Nenndaten der elektrischen Maschine zu erhalten, zu einer Überdimensionierung dieser elektrischen Maschine. Dadurch fallen u.a. höhere Herstellungskosten an.

Um die Kühlwirkung zu verbessern wurde die Förderleistung des Lüfters erhöht. Damit soll sich auch an entfernten Gehäuseteilen der elektrischen Maschine eine ausreichende Kühlwirkung einstellen. Eine Erhöhung dieser Förderleistung ist mit einem Anstieg der Geräuschemissionen verbunden.

Um die Strömungsablösung zu vermeiden, sind bisher aufwendige Luftführungskanäle geschaffen worden, die zusätzlichen Druckabfall verursachen und zwischen elektrischer Maschine und Kühlluftstrom eine ungenügende Wärmeübertragung aufweisen.

Der Erfindung liegt demzufolge die Aufgabe zugrunde, ein effizientes Kühlkonzept für eine elektrische Maschine zu schaffen

Die Lösung der gestellten Aufgabe gelingt durch eine elektrische Maschine mit einem Gehäuse und zumindest einem Lüfter, wobei Mittel vorhanden sind, die den durch den Lüfter erzeugten Kühlluftstrom entlang der Oberfläche des Gehäuses der elektrischen Maschine führen.

Damit stellt sich eine effizientere Kühlluftströmung ein, da der Kühlluftstrom entlang des gesamten Gehäuses der elektrischen Maschine streicht. Es stellt sich insbesondere gegenüber herkömmlichen Oberflächenkühlsystemen ein verbesserter Wärmeübergang ein.

In einer erfindungsgemäßen Ausgestaltung wird durch einen zweiten Lüfter vorzugsweise auf der dem ersten Lüfter gegenüberliegenden Seite der elektrischen Maschine durch Erzeugung eines Sogs ein Unterdruck geschaffen, so dass der durch den ersten Lüfter erzeugten Kühlluftstrom entlang der Oberfläche des Gehäuses der elektrischen Maschine geführt wird. Es wird damit eine Strömungsablösung des vom ersten Lüfter erzeugten Kühlluftstroms vom Gehäuse der elektrischen Maschine verhindert.

Der erste Lüfter ist auf einer Stirnseite der elektrischen Maschine vorzugsweise der Antriebsseite angeordnet. Er befindet sich in einer ein oder mehrteiligen Kapselung, die Lüftungsöffnungen aufweist. Die Förderrichtung der Kühlluft verläuft in axialer Richtung entlang dem Gehäuse der elektrischen Maschine, das vorzugsweise mit axialen Rippen versehen ist. Die axiale Förderrichtung wird durch einen axialen oder radialen Lüfter mit dazu geeigneten Leitvorrichtung erreicht.

Vorteilhafterweise ist dieser zweite Lüfter als Axiallüfter ausgeführt, der damit bei gleicher Förderrichtung wie der erste Lüfter auf der Oberfläche des Gehäuses der elektrischen Maschine einen Unterdruck erzeugt.

Ein Führen des Kühlluftstroms kann auch durch eine Leitvorrichtung erfolgen, die in Umfangsrichtung verlaufen und eine vorgebbare axiale Ausdehnung aufweisen.

In einer besonders bevorzugten Ausführungsform befindet sich der zweite Lüfter innerhalb einer ein- oder mehrteiligen Kapselung, die Ausblasstellen aufweist. Diese Ausblasstellen des zweiten Lüfters führen bei geeigneter Ausrichtung ebenfalls zu einem Sog und Unterdruck und verhindern somit eine Ablösung der Strömung des von dem ersten Lüfter erzeugten Kühlluftstrom. Der zweite Lüfter kann bei Einsatz von Ausblasstellen als axialer oder radialer Lüfter ausgebildet sein.

Die Ansaugrichtung des zweiten Lüfters in dieser Kapselung ist dabei insbesondere im Bereich der axialen Verlängerung der Welle der elektrischen Maschine. Dies führt zu einer Kühlung der in dieser Kapselung angeordneten Elementen wie Schleifringen, Bürsten bei Schleifringläufermotoren und/oder elektronischen Einrichtungen, wie z.B. Regeleinrichtungen.

Die Erfindung sowie weitere vorteilhafte Ausgestaltungen der Erfindung gemäß Merkmale der Unteransprüche werden im folgenden anhand schematisch dargestellter Ausführungsbeispiele in der Zeichnung näher erläutert. Darin zeigt:
FIG 1 eine Seitenansicht einer elektrischen Maschine mit zwei Kühlvorrichtungen.
FIG 2 eine Darstellung einer Leitvorrichtung um das Gehäuse

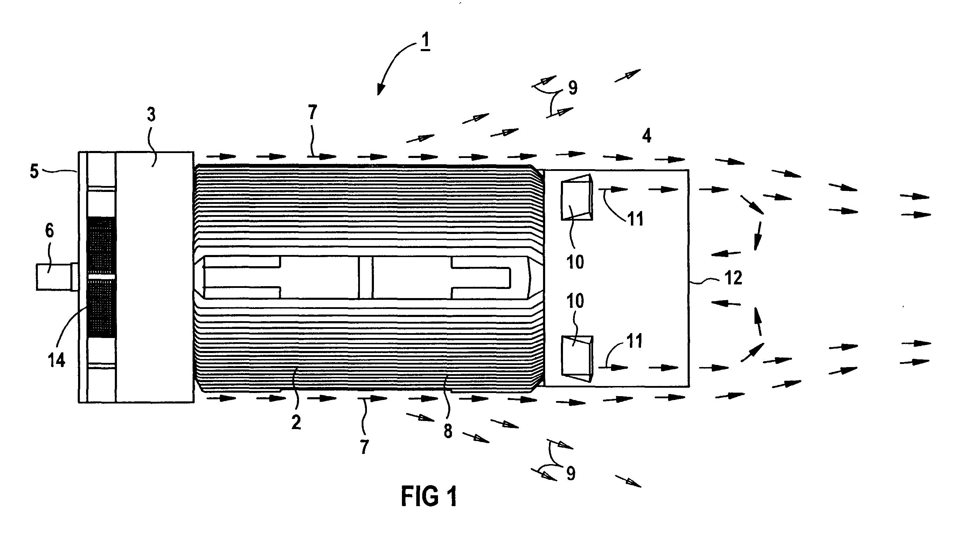

FIG 1 zeigt eine elektrische Maschine 1 mit einem gerippten Gehäuse 2, das als Graugussrippengehäuse ausgeführt ist. An den Stirnseiten dieses Gehäuses 2 befinden sich nicht näher dargestellte Lüfter, die jeweils unter einer Abdeckung bzw. Kapselung 3,4 angeordnet sind. Der Lüfter unter der Kapselung 3 ist als Hauptlüfter ausgeführt. Die Ansaugung des Kühlluftstroms 7 erfolgt u.a. über Lüftungsöffnungen 14. Ein Wellenstumpf 6 ragt durch die Kapselung 3 um daran eine Arbeitsmaschine koppeln zu können.

Der Hauptlüfter erzeugt einen Kühlluftstrom 7, der entlang dem Gehäuse 2 und den Rippen 8 streicht. Nach ca. der Hälfte der axialen Länge des Gehäuses 2 der elektrischen Maschine 1 ausgehend von der Kapselung 3, tritt eine Ablösung 9 des Kühlluftstrom 7 von den Rippen 8 und dem Gehäuse 2 der elektrischen Maschine 1 ab.

Um dies zu vermeiden, ist auf der gegenüberliegenden Seite der Kapselung 3 ein weiterer nicht näher dargestellter Lüfter innerhalb einer Kapselung 4 angeordnet. Die Kapselung 4 weist gerichtete Ausblasstellen 6 auf, sodaß durch den in der Kapselung 4 angeordneten Lüfters ein Luftstrom 11 erzeugt wird der auf dem Gehäuse 2 einen Unterdruck erzeugt, wobei durch den dadurch erzeugten Sog die Ablösung des Kühlluftstroms 5 auf der elektrischen Maschine 1 verhindert wird. Diese Ausblasstellen 6 sind vorzugsweise in Umfangsrichtung auf der Kapselung 4 verteilt angeordnet, um eine möglichst gleichmäßige Sogwirkung zu erzielen.

Die Ansaugung 12 des Lüfters in der Kapselung 4 erfolgt durch nicht näher dargestellte Lüftungsschlitze bzw. -kanäle im Bereich der axialen Verlängerung der Welle der elektrischen Maschine 1. Vorteilhafterweise werden dabei durch die Ansaugung 12 weitere Wärmequellen gekühlt. Dies sind insbesondere bei einem Schleifringläufermotor die Schleifringe und Bürsten. Andere Wärmequellen, wie z.B. elektronische Schaltungen, die der Regelung dienen lassen sich dadurch ebenfalls kühlen.

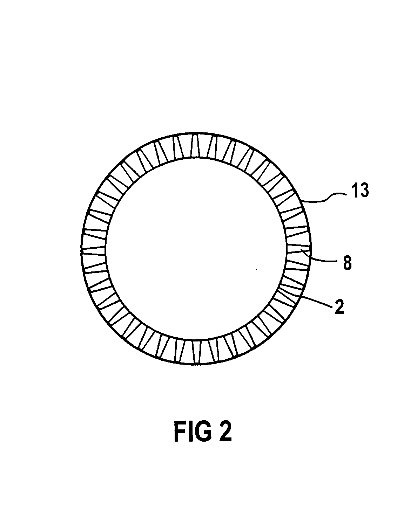

Fig 2 zeigt in einem Querschnitt des Gehäuses 2 der elektrischen Maschine 1 eine Leitvorrichtung 13 die dazu dient die Ablösung 9 des Kühlluftstroms 7 zu verhindern.

Um die Ablösung 9 des Kühlluftstroms 7 zu verhindern reicht es aus, daß der Lüfter in Kapselung 4 einen Volumendurchsatz aufweist, der kleiner als die Hälfte der des Hauptlüfters sein kann. Die verwendeten Lüfter sind als Radial- oder Axiallüfter ausgeführt und durch ev. Leitvorrichtungen 13 und/oder Ausblasstellen 10 in ihrer Wirkung optimiert.

Das erfindungsgemäße Prinzip ist nicht nur auf elektrische Maschinen beschränkt, sonder kann bei sämtlichen oberflächengekühlten Wärmetauschern eingesetzt werden.

## Patentansprüche

1. Elektrische Maschine (1)mit einem Gehäuse (2) und zumindest einem Lüfter, wobei Mittel vorhanden sind, die den durch den Lüfter erzeugten Kühlluftstrom (7) entlang der Oberfläche des Gehäuses (2) der elektrischen Maschine (1) führen.

2. Elektrische Maschine (1) nach Anspruch 1, **dadurch gekennzeichnet, dass** zumindest ein zweiter Lüfter auf der dem ersten Lüfter gegenüberliegenden Seite der elektrischen Maschine (1) vorhanden ist, welcher zweite Lüfter aufgrund der Erzeugung eines Sogs, eine Ablösung (9) des durch den ersten Lüfter erzeugten Kühlluftstroms (7) in Förderrichtung auf der Oberfläche des Gehäuses (2) der elektrischen Maschine (1) verhindert.

3. Elektrische Maschine (1) nach Anspruch 1 oder 2, d a**durch gekennzeichnet**, dass das Gehäuse (2) der elektrischen Maschine (1) Leitvorrichtungen (13) aufweist.

4. Elektrische Maschine (1) nach einem der vorhergehenden Ansprüche, **dadurch gekennzeichnet, dass** der zweite Lüfter als Axiallüfter ausgeführt ist.

5. Elektrische Maschine nach Anspruch 4, **dadurch gekennzeichnet, dass** die Förderrichtung des zweiten Lüfters der Förderrichtung des ersten Lüfters entspricht.

6. Elektrische Maschine nach Anspruch 5, **dadurch gekennzeichnet, dass** die Ansaugrichtung des zweiten Lüfters entgegen der Förderrichtung des zweiten Lüfters ist.

7. Elektrische Maschine (1) nach einem oder mehreren der vorhergehenden Ansprüche, **dadurch gekennzeichnet, dass** der zweite Lüfter in einer Kapselung (4) untergebracht ist, das Ausblasstellen (10) aufweist, die derart gerichtet sind, daß sich eine Sogwirkung auf dem Gehäuse (2) für den Kühlluftstrom (7) einstellt.
